# FASCICULE DE BREVET EUROPEEN

(11) **EP 0 685 043 B1**
(45) Date de publication et mention de la délivrance du brevet: **09.06.1999**
(21) Numéro de dépôt: 95904562.6
(22) Date de dépôt: 19.12.1994
(51) Int. Cl.: F16F 15/12

(54) **AMORTISSEUR DE TORSION, NOTAMMENT POUR VEHICULE AUTOMOBILE A ENCOMBREMENT AXIAL REDUIT**
TORSIONSDÄMPFER, INSBESONDERE FÜR KRAFTFAHRZEUGE MIT BESCHRÄNKTEN AXIALABMESSUNGEN
TORSION DAMPER, PARTICULARLY FOR MOTOR VEHICLE, WITH REDUCED AXIAL DIMENSION

(30) Priorité: 23.12.1993 FR 9315571; 30.06.1994 FR 9408324
(43) Date de publication de la demande: 06.12.1995
(73) Titulaire: VALEO, 75017 Paris (FR)
(72) Inventeur: RÖHRLE, Dieter, F-95160 Montmorency (FR); BONFILIO, Ciriaco, F-92100 Clichy (FR)
(74) Mandataire: Gamonal, Didier
(86) Numéro de dépôt international: FR9401482
(87) Numéro de publication internationale: WO9517614

(56) Documents cités:
- EP-A- 0 529 669
- DE-A- 3 721 712
- FR-A- 2 593 871
- GB-A- 2 186 344
- GB-A- 2 219 647
- GB-A- 2 251 284
- GB-A- 2 262 587

## Description

La présente invention concerne un amortisseur de torsion, notamment pour véhicule automobile, tel que décrit et représenté par exemple dans le document US-A-4.782.933.

L'invention concerne plus particulièrement un amortisseur de torsion, notamment pour véhicule automobile, comportant un premier et un second éléments tournants coaxiaux qui définissent entre eux un logement annulaire étanche, agencé radialement vers l'extérieur, qui reçoit un dispositif élastique d'amortissement lubrifié comprenant des ressorts à action circonférentielle agissant entre les deux éléments tournants, du type dans lequel le logement annulaire est délimité par au moins deux pièces appartenant à un premier des deux éléments tournants, dans lequel le second des deux éléments tournants comporte un plateau et un disque annulaire fixé au plateau par une série d'organes de fixation, par exemple par des rivets, agencés circonférentiellement au voisinage du bord périphérique interne du disque, et du type comportant un système annulaire d'amortissement à friction agencé entre le premier élément tournant et le disque du second élément tournant.

Le document US-A-4.782.933 décrit et représente une conception de ce type dans laquelle le système complémentaire d'amortissement à friction est disposé radialement vers l'intérieur et entoure le moyeu du premier élément tournant qui comporte une portée cylindrique usinée pour certains composants du dispositif d'amortissement à friction.

De plus, le système d'amortissement à friction est disposé axialement entre le roulement de palier interposé entre le moyeu du premier élément tournant et l'élément en forme de plateau du second élément tournant, et entre une portion de surface annulaire en vis-à-vis du plateau du premier élément tournant.

Cet agencement accroît de manière importante l'encombrement axial de la partie centrale du premier élément tournant et nécessite d'augmenter de manière importante la longueur des vis de fixation de l'amortisseur de torsion sur le vilebrequin du véhicule qui traversent le moyeu du premier élément tournant.

Dans le document FR-A-2 593 871, conforme au préambule de la revendication 1, le logement n'est pas étanche et il est prévu un système annulaire d'amortissement disposé en majeure partie radialement au-delà de la zone occupée par les organes de fixation du disque et radialement vers l'intérieur par rapport au logement annulaire. Ce disque pénètre dans le logement et intervient dans le système de frottement porté en majeure partie par le second élément tournant.

En outre un autre système annulaire d'amortissement à friction est implanté entre le roulement et le premier élément tournant. On ne peut donc pas réduire l'encombrement axial à ce niveau.

Il est souhaitable de réduire l'encombrement axial de l'amortisseur de torsion, au niveau du moyeu central, afin d'accroître la robustesse du volant amortisseur, de pouvoir réduire la longueur des vis de fixation pour disposer d'un supplément de place disponible pour le disque de friction de l'embrayage associé au volant amortisseur (disque 9 de la figure 1 du document US-A-782.933) afin de disposer d'une place supplémentaire pour l'agencement du disque de friction et/ou pour éviter de déformer la partie centrale de ce dernier élément pour ménager un espace dans lequel sont agencées les têtes de fixation des vis de fixation de l'amortisseur de torsion sur le vilebrequin.

La présente invention a pour but de proposer un amortisseur de torsion qui permet de remédier à ces inconvénients et de répondre à ces souhaits.

Conformément à l'invention ce problème est résolu par la partie caractérisante de la revendication 1.

Grâce à un tel agencement, il est possible de réduire de manière importante la longueur axiale du moyeu car plus aucun composant du système d'amortissement à friction n'est disposé entre le roulement de palier et l'élément en forme de plateau du premier élément tournant.

En outre il n'y a pas besoin d'usiner le premier élément tournant au voisinage de son moyeu, car le système d'amortissement n'est pas implanté à ce niveau.

Grâce à cette disposition on peut rajouter de la matière, en sorte que la zone d'enracinement du moyeu est plus robuste. De plus on peut rapprocher le roulement et donc augmenter la distance entre la face de friction du second élément tournant et le roulement au bénéfice d'une meilleure évacuation de la chaleur.

Le roulement sera ainsi moins chaud dans des conditions sévères d'utilisation.

De plus le montage est simplifié puisque le système d'amortissement à friction est porté par le premier élément tournant et radialement principalement au-delà des organes de fixation du disque. Le système d'amortissement est indépendant du palier intervenant entre les deux éléments tournants.

Grâce à l'invention le logement est étanche, le manchon peut servir par sa périphérie externe à l'appui et au centrage d'une rondelle d'étanchéité.

Selon d'autres caractéristiques de l'invention :
- le bord radial interne du disque du second élément tournant comporte une première série de pattes radiales réparties angulairement de manière régulière et qui sont traversées par les corps des organes de fixation du disque sur le plateau du second élément tournant ;
- le premier élément tournant comporte un moyeu qui délimite une portée pour la bague intérieure d'un roulement de palier dont la bague extérieure est reçue dans une portée formée dans un manchon central du plateau du second élément tournant ;
- le bord radial interne du disque du second élément tournant comporte une deuxième série de pattes radiales, réparties angulairement entre les pattes de fixation de la première série, qui coopèrent avec une face radiale d'extrémité en vis-à-vis de la bague extérieure du roulement pour caler cette dernière axialement dans le manchon central du plateau du second élément tournant ;
- les organes de fixation sont des rivets ;
- les organes de fixation sont des vis ;
- les têtes des organes de fixation coopèrent de manière simple et économique avec un composant tournant du système d'amortissement à friction pour l'entraînement de celui-ci par le second élément tournant et création de frottement ;
- en section axiale, le disque du second élément tournant présente un profil tortueux comportant un coude qui épouse, avec jeu, la forme de l'extrémité du manchon formé en saillie sur la face interne du plateau du premier élément tournant ;
- le disque comporte, de part et d'autre du coude, une première portion annulaire plane qui s'étend dans ledit logement annulaire étanche et une seconde portion annulaire plane ;
- lesdites pattes de fixation sont découpées dans ladite seconde portion annulaire plane ;
- lesdites pattes de calage sont décalées axialement par rapport au plan de ladite seconde portion annulaire plane ;
- lesdites première et seconde portions annulaires planes sont sensiblement coplanaires ;
- le moyeu est relié à la face interne du plateau du premier élément tournant par une zone arrondie de raccordement ;
- le moyeu est réalisé en une seule pièce venue de matière avec le plateau du premier élément tournant ;
- le moyeu est réalisé en partie sous la forme d'une pièce rapportée sur le plateau du premier élément tournant ;
- l'amortisseur consiste en un volant amortisseur de torsion pour véhicule automobile, dont le premier élément tournant comporte un plateau destiné à être calé en rotation sur le moteur à combustion interne du véhicule automobile, tandis que son second élément tournant est destiné à être calé en rotation sur l'arbre d'entrée de la boîte de vitesses, et le plateau du premier élément tournant porte à sa périphérie externe une jupe d'orientation axiale, à l'extrémité libre de laquelle est fixé, de manière étanche, un disque s'étendant radialement vers l'intérieur, en sorte que le logement annulaire étanche est délimité en majeure partie par ledit plateau, la jupe et le disque, tandis que le disque du second élément tournant est solidaire d'un plateau formant le plateau de réaction d'un embrayage.

On appréciera que le raccordement du plateau du premier élément tournant avec son moyeu en une ou deux parties peut se faire par une zone arrondie ou d'autres formes, c'est-à-dire avec un supplément de matière par rapport à la disposition du document US-A-4,782,933 car il n'y a pas d'usinage à réaliser à cet endroit. Ainsi l'ensemble plateau - moyeu est plus robuste.

On appréciera que le profil tortueux du disque du second élément tournant permet de ne pas augmenter l'encombrement axial de l'amortisseur de torsion et d'utiliser la place disponible.

On notera que le manchon associé au système d'amortissement à friction peut être réalisé aisément par moulage et que le montage du double volant est simplifié car le système d'amortissement est porté en majeure partie par le premier plateau.

Cette disposition permet aisément de roder par avance la rondelle de frottement, que comporte ledit système d'amortissement. En outre on peut utiliser le manchon pour le montage d'une rondelle d'étanchéité.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en section axiale, selon la ligne 1-1 de la figure 2, qui illustre un premier exemple de réalisation d'un amortisseur de torsion conforme aux enseignements de l'invention ;
- la figure 2 est une vue latérale de droite, illustrée en partie en section axiale selon la ligne 2-2 de la figure 1 ;
- les figures 3 et 4 sont des vues similaires à celles de la figure 1 qui illustrent d'autres variantes de réalisation.

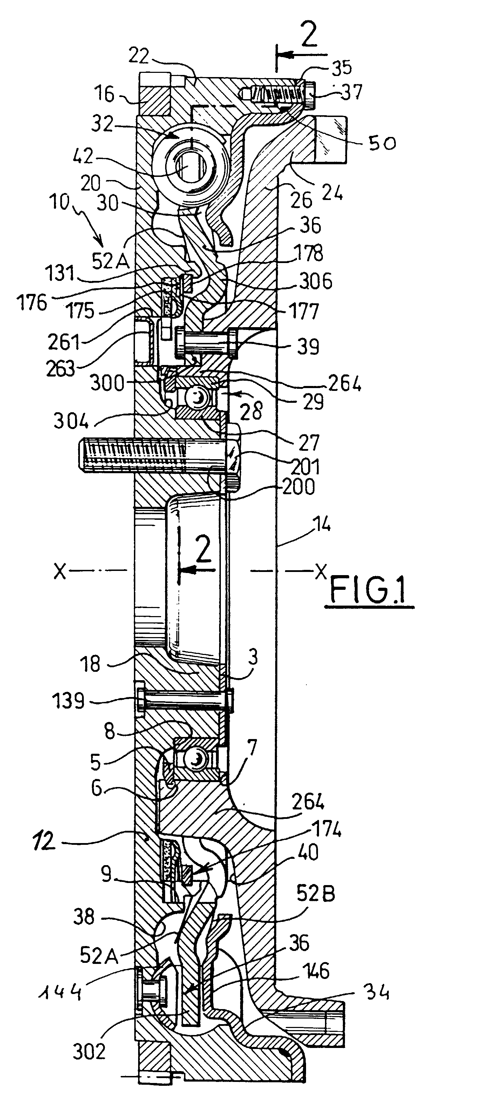

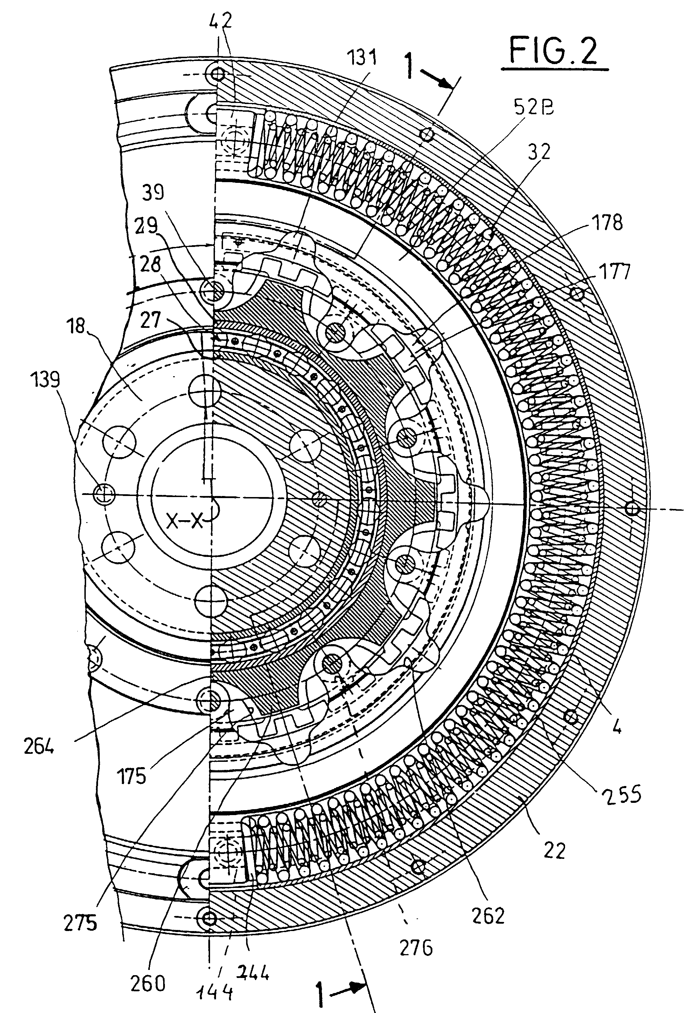

On a représenté aux figures 1 et 2 un amortisseur de torsion sous la forme d'un volant amortisseur 10 pour véhicule automobile, qui est pour l'essentiel constitué par un premier élément tournant 12 et un second élément tournant 14, qui sont susceptibles de tourner l'un par rapport à l'autre autour d'un axe X-X à l'encontre d'un dispositif élastique d'amortissement 32 à action circonférentielle, agissant entre les éléments tournants 12 et 14.

Ce dispositif élastique d'amortissement 32 est monté dans un logement annulaire 30 défini par les deux éléments tournants. Le logement annulaire est ici délimité principalement par le premier élément tournant 12, et le second élément tournant 14 comporte un disque 36 qui pénètre dans le logement annulaire 30.

Sur les figures, le premier élément tournant 12, en forme générale de plateau, porte une couronne extérieure dentée 16 prévue pour coopérer avec le démarreur du véhicule (non représenté) et un moyeu central 18 prévu pour être fixé sur l'extrémité du vilebrequin (non représenté) du moteur à combustion interne du véhicule, usuellement par des vis 200.

Le premier élément tournant 12 est constitué pour l'essentiel par un plateau 20 et par une jupe annulaire périphérique cylindrique 22, d'orientation axiale, qui entoure partiellement une jupe annulaire périphérique cylindrique 24 qui prolonge axialement la partie principale en forme de plateau 26 du second élément tournant 14, qui est montée à rotation sur le moyeu 18 par l'intermédiaire d'un palier 28 qui est ici constitué par un roulement à billes.

Les jupes 22 et 24 sont d'un seul tenant avec leurs plateaux associés 20, 26.

Le plateau 26 constitue le plateau de réaction d'un embrayage comme cela est décrit et représenté dans le document US-A-4.782.933.

Pour mémoire, on rappellera que l'embrayage comporte également un disque de friction, doté, à sa périphérie externe, de garnitures de frottement, et un plateau de pression soumis usuellement à l'action d'un diaphragme prenant appui sur un couvercle fixé sur l'extrémité libre de la jupe 24 de la masse 14.

Le disque de friction est couplé à un moyeu calé en rotation sur l'arbre d'entrée de la boîte de vitesses. Lorsque l'embrayage est engagé, les garnitures de frottement du disque de friction sont serrées entre les plateaux de pression et de réaction de l'embrayage, en sorte que le couple est transmis du moteur à l'arbre d'entrée de la boîte de vitesses.

Pour désengager (débrayer) l'embrayage, on agit sur le diaphragme en tirant ou en poussant sur l'extrémité des doigts du diaphragme afin de desserrer les garnitures de frottement du disque de friction comme mentionné dans le document US-A-4,782,933.

Le volant amortisseur, communément appelé double volant amortisseur, comporte ainsi deux masses coaxiales, à savoir le premier élément tournant 12 et le second élément tournant 14, montées tournantes l'une par rapport à l'autre, la première masse 12 étant calée en rotation sur le moteur à combustion interne du véhicule, tandis que la seconde masse 14 est destinée à être calée en rotation, par l'intermédiaire de l'embrayage, sur l'arbre d'entrée de la boîte de vitesses.

Les masses 12, 14 sont montées tournantes l'une par rapport à l'autre à l'encontre du dispositif d'amortissement 32 à action circonférentielle et d'au moins un système annulaire complémentaire d'amortissement à friction 174 agissant axialement entre les deux masses.

Les plateaux 20, 26 et les jupes 22 et 24 délimitent un logement annulaire externe 30, qui est prévu pour recevoir le dispositif élastique d'amortissement 32 constitué ici par un ensemble de ressorts hélicoidaux concentriques, à action circonférentielle, agencés en secteurs annulaires. Ces ressorts s'étendent ici globalement sur 180° d'angle.

Le premier élément tournant 12 comporte également un disque radial interne 34 qui s'étend radialement depuis la jupe 22 en direction de l'axe X-X de l'ensemble. Ainsi, le logement 30 est délimité en majeure partie par des pièces 20, 22, 34 appartenant ici au premier élément tournant 12.

A cet effet, le disque 34 est lié en rotation à la jupe extérieure 22. En section axiale, le disque 34 présente une forme tortueuse et il est prolongé à sa périphérie externe par un rebord annulaire d'orientation axiale qui est en contact avec la périphérie interne de la jupe 22, et par un rebord radial 35 prolongeant son rebord axial.

Le rebord axial 35 est en contact avec l'extrémité libre de la jupe 22. Il est troué localement pour le passage de vis 37 de fixation du disque 34 à la jupe 22, le rebord 35 constituant ainsi un rebord de fixation.

Le second élément tournant 14 comporte un disque 36 qui s'étend radialement vers l'extérieur et qui lui est lié en rotation par des rivets 39, à la faveur d'une zone annulaire plane d'orientation radiale 300. Le disque 36 s'étend radialement dans le logement 30 formé à la périphérie externe du volant amortisseur à la faveur d'une zone annulaire plane d'orientation radiale 302. Le disque 36 s'étend également dans l'espace annulaire central délimité entre des portions de surfaces en vis-à-vis 38 et 40 des plateaux 20 et 26.

Le logement annulaire étanche 30 est délimité également intérieurement en partie par le disque 36 et forme une cavité qui est ici partiellement remplie de graisse pour lubrifier les ressorts du dispositif élastique 32 et augmenter ainsi la durée de vis de l'amortisseur, tout en améliorant son fonctionnement. Le disque 36, comme le disque 34, est ici métallique en étant obtenu par découpe et emboutissage.

Le bord extérieur du disque 36 comporte, à l'intérieur du logement étanche 30, des pattes radiales externes 42 prévues pour servir de butée et d'appui aux extrémités circonférentielles des ressorts à boudin concentriques du dispositif élastique 32.

Les pattes 42 du disque 36 s'étendent entre des butées en vis-à-vis 144 du plateau 20 et des butées en vis-à-vis 146 du disque 34 de l'élément tournant 12.

Les butées 144, 146 servent d'appui aux extrémités circonférentielles des ressorts du dispositif 32. Plus précisément des coupelles d'appui 244 sont interposées entre les ressorts du dispositif 32 et les butées 144,146. Ces coupelles 244 présentent des tétons centraux pénétrant, de manière connue en soi, à l'intérieur du ressort central pour soutien des ressorts. Ces butées sont formées respectivement à la faveur de pièces métalliques 144 fixées par rivetage étanche au plateau 20 et par des emboutissages locaux 146 du disque 34. A la partie inférieure de la figure 1, les ressorts du dispositif 32 n'ont pas été représentés afin de mieux faire apparaître les butées 146,144.

Ainsi, le plateau 20 et le disque 34 forment des rondelles de guidage pour les ressorts du dispositif 32 et le disque 36 comporte un voile 302 pénétrant entre le plateau 20 et le disque 34.

D'une manière connue, lors d'un mouvement relatif entre les deux masses 12 et 14, les bras 42 agissent sur les ressorts du dispositif 32, dont les extrémités circonférentielles sont en appui, par l'intermédiaire des coupelles 244, sur les butées 144, 146, en sorte que les ressorts concentriques sont comprimés.

Le logement 30 supporte également radialement les ressorts à boudin du dispositif 32 avec intervention de pièces anti-usure 255, en forme de goulotte, entre les ressorts et la périphérie interne de la jupe 22.

On notera que le plateau 20 est creusé au niveau du dispositif 32 pour loger les ressorts de ce dispositif. Avantageusement, les plateaux 20 et 26, avec leurs jupes 22 et 24, sont obtenus par moulage, le plateau 26 étant usuellement en fonte.

L'étanchéité du logement annulaire 30 qui est ouvert vers l'intérieur, est assurée au moyen d'un joint torique d'étanchéité 50 interposé entre la périphérie interne de la jupe 22 et le rebord de fixation 35 du disque 34 et par deux rondelles 52A et 52B disposées de part et d'autre du disque du second élément tournant 14.

En position montée, chaque rondelle 52A, 52B est comprimée axialement directement entre une surface de portée appartenant au premier élément tournant 12 et une seconde surface de portée appartenant au disque 36 du second élément tournant 14.

Dans le mode de réalisation illustré aux figures 1 et 2, le moyeu central 18 est réalisé venu de matière en une seule pièce avec le plateau 20.

La bague intérieure 27 du roulement 28 est calée axialement, d'une part à l'avant par un épaulement 8 ménagé à la périphérie externe du moyeu 18 d'un seul tenant avec le plateau 20 de la première masse 12 et, d'autre part, à l'arrière par une rondelle 3 fixée par des rivets 139 sur l'extrémité libre du moyeu 18. La rondelle 3 sert aussi d'appui aux têtes 201 des vis de fixation 200.

La bague externe 29 du roulement 28 est calée axialement, d'une part à l'arrière par un épaulement 7 de la seconde masse tournante et, d'autre part, à l'avant par un anneau fendu 5 dont la périphérie externe forme un coin avec une face avant dotée d'une portée conique pour coopération avec une portée conique complémentaire que présente une gorge 6 dans laquelle est monté l'anneau 5.

La gorge 6 est pratiquée dans un manchon central annulaire cylindrique d'orientation axiale 264 qui est réalisé venu de matière en une seule pièce avec le plateau de réaction 26 et qui s'étend en direction du plateau 20.

La face arrière de l'anneau 5 est plane pour coopérer avec la face radiale correspondante de la bague extérieure 29 du roulement 28.

Cette disposition rend plus robuste le plateau de réaction 26. En effet, on peut également monter la rondelle 5 à l'arrière de la bague extérieure 29 du roulement 28, mais dans ce cas des amorces de rupture peuvent se produire. En montant l'anneau 5 à l'avant on diminue ces risques. De plus cela permet de diminuer l'épaisseur axiale du plateau de réaction 26 comme cela est visible sur la figure 1 au bénéfice d'une réduction globale de l'encombrement axial de l'amortisseur.

Dans ce but, le système d'amortissement à friction 174 est disposé radialement à l'extérieur au-dessus de l'anneau 5 et ici en dehors de la zone occupée par les rivets 39 de fixation du disque 36 sur le plateau 26, et radialement à l'intérieur par rapport au logement annulaire 30 et aux rondelles 52A et 52B.

Le système annulaire d'amortissement à friction 174 est ainsi agencé autour du manchon central 264 du plateau 26.

On notera que le roulement 28 est décalé axialement par rapport à la face de friction du plateau de réaction 26.

Grâce à l'invention ce décalage est plus important que celui montré dans le document US-A-4,782,933 du fait que l'on peut raccourcir le moyeu 18 grâce à l'implantation du système 174.

Ainsi on évacue mieux les calories et le roulement 28 est ainsi moins chaud. En outre l'ensemble plateau 20 - moyeu 18 est plus robuste puisque le moyeu 18 est plus court.

Le système annulaire d'amortissement à friction 174 à action axiale comporte, successivement et axialement en allant du plateau 20 vers le plateau 26, une rondelle de frottement 175, une rondelle de répartition 176, une rondelle élastique à action axiale 177, et un circlips 178.

La rondelle 177 est du type Belleville et elle prend appui sur le circlips 178 pour agir sur la rondelle 176 et serrer la rondelle 175 entre le plateau 20 et la rondelle 176.

Dans ce but, le plateau 20 présente selon l'invention radialement au-dessus des rivets 39 de fixation du disque 36 au plateau 26, un retour, d'orientation axiale, en forme de manchon annulaire cylindrique 131 qui est dirigé vers le disque 36. Le retour 131 présente intérieurement un alésage avec une gorge pour le montage du circlips 178.

L'alésage interne du retour 131 présente des rainures 9 à fond fermé par le plateau 20.

La rondelle métallique 176 présente à sa périphérie externe des tenons sous forme de pattes radiales pour engagement de manière complémentaire dans les rainures 9.

La rondelle 176 est ainsi liée en rotation, avec mobilité axiale, au plateau 20 par coopération de formes du type tenons et mortaises.

Deux rainures 9 diamétralement opposées sont prévues dans le mode de réalisation illustré sur les figures.

On notera que la rondelle Belleville 177 présente intérieurement des doigts radiaux dirigés vers le centre pénétrant entre deux bossages consécutifs que présente par emboutissage la rondelle 176 à sa périphérie interne.

La rondelle 177 est donc bloquée en rotation par coopération de formes de ses doigts avec les bossages de la rondelle 176, usuellement nommée rondelle d'application.

La rondelle 175 présente à sa périphérie interne des échancrures 275, 276 pour respectivement le passage des tenons, d'orientation axiale, 260 que comporte le plateau de réaction 26 entre deux rivets 39 consécutifs, et pour accéder aux têtes des rivets 39.

La rondelle 175 est décalée axialement par rapport à la tête des rivets 39 et grâce aux échancrures 276, ouvertes radialement vers l'extérieur, on peut faire passer l'outil de sertissage à travers les ouvertures 261 prévues dans le plateau 20 à cet effet, pour procéder à la fixation du disque 36 au plateau 26 par rivetage.

Ensuite, on bouche les trous 261 à l'aide de caches 263. Les échancrures 275, ouvertes radialement vers l'intérieur, constituent des mortaises traversées avec jeu circonférentiel par les tenons 260.

On notera que les tenons sont aisément réalisables par fraisage et c'est la raison pour laquelle ils possèdent des bords latéraux de forme circulaire. Les tenons 260 font saillie radialement par rapport aux rivets 39.

Les bords des échancrures 275 de la rondelle 175 sont bombés. Ainsi, la rondelle 175, qui est avantageusement réalisée en matériau synthétique, engrène avec jeu avec les tenons 260 du plateau 26 et fait sentir ses effets de manière différée (après rattrapage des jeux). Les bords latéraux des tenons 260 et des échancrures 275 ont une forme complémentaire. Ainsi, le système d'amortissement à friction 174, implanté axialement entre le plateau 20 et le disque 36, n'agit pas sur ce disque.

La fixation du disque 36 est donc ménagée et on notera (figure 2) que le système d'amortissement s'étend principalement radialement au-dessus des rivets 39, seuls les bords des échancrures 275,276 s'étendant radialement au niveau des rivets.

On notera que les tenons 260 sont reliés ensemble à leur périphérie interne par le manchon 264. Ces tenons 260 rigidifient donc le manchon 264 dirigé vers le plateau 20. On obtient donc une solution très robuste avec un manchon 264 dirigé axialement en sens inverse par rapport au retour en forme de manchon 131 du plateau 20.

On notera que la périphérie externe du plateau 26 est évasée pour le logement de la jupe 22 avec son disque 34, ainsi que pour le montage du dispositif élastique 32.

L'épaisseur du plateau de réaction 26 est ainsi décroissante en allant radialement en direction opposée à l'axe de l'ensemble.

Par ailleurs, la zone d'enracinement du manchon 264 au plateau 26 est formée à la faveur d'arrondis. On obtient ainsi une disposition très compacte axialement et très robuste.

De même, la zone d'enracinement du moyeu 18 au plateau 20 est formée à la faveur d'arrondis 304 qui accroissent la robustesse du plateau 20 et qui sont nettement plus favorables, à cet effet, que les usinages prévus dans l'état de la technique pour l'agencement des composants d'un système d'amortissement à friction (voir document US-A-4.782.933).

Comme on peut le voir sur la figure 1 les portions annulaires planes d'orientation radiale intérieure 300 et extérieure 302 du disque 36 sont sensiblement coplanaires et elles sont reliées entre elles par un coude 306 qui épouse, avec jeu axial, le profil de l'extrémité libre du retour en forme de manchon 131.

Ceci permet de ne pas accroître l'encombrement axial du volant amortisseur.

On appréciera que le manchon 131 sert également, par sa périphérie externe, à l'appui et au centrage de la rondelle d'étanchéité 52A, qui peut ainsi être mise aisément sous précontrainte tout comme la rondelle 52B.

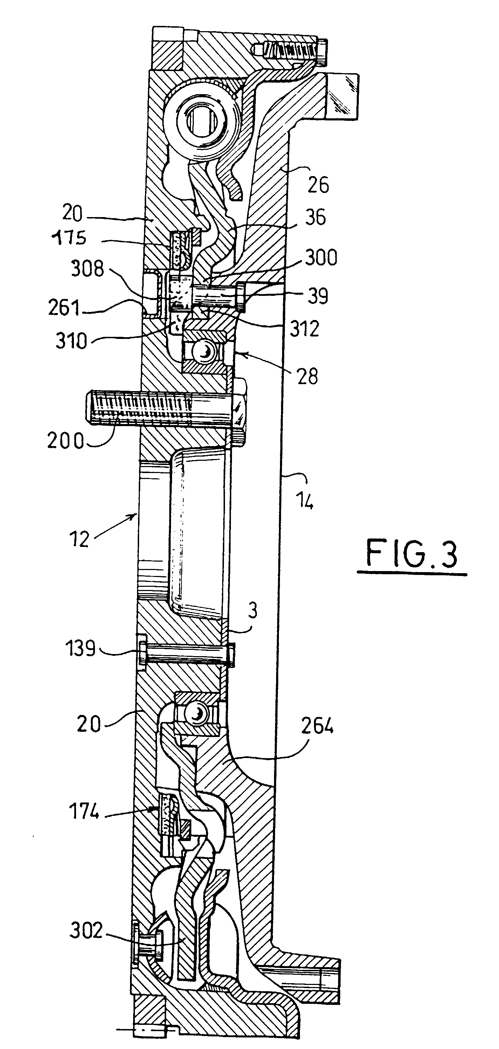

Dans la variante de réalisation illustrée sur la figure 3, les têtes 308 des rivets 39 de fixation du disque 36 au plateau 26 participent à l'entraînement en d'au moins un organe appartenant au système annulaire d'amortissement à friction 174, tel que la rondelle 175 de la figure 1. Pour ce faire on notera que les têtes 308 sont en forme de tétons pour pouvoir engrener avec la périphérie interne de la rondelle 175, les têtes 308 constituant des tenons axiaux engagés avec ou sans jeu dans des mortaises formées dans la rondelle 175 à la périphérie interne de celle-ci.

Ces mortaises peuvent consister en des évidements ouverts ou éventuellement en des trous. La rondelle 175 est donc ici dans le plan des têtes 308 de rivets.

La portion annulaire d'orientation radiale intérieure 300 du disque 36 comporte une série de pattes 310 qui sont découpées dans la portion annulaire plane 300 et sont décalées axialement par rapport au plan de cette dernière pour constituer des pattes de calage axial de la bague extérieure 29 du roulement de palier 28 en coopérant à cet effet avec la face radiale d'extrémité de cette dernière tournée vers le plateau 20. La portion annulaire plane 300 comporte ainsi une série de pattes de calage 310 réparties régulièrement qui sont intercalées avec une série de pattes de fixation 312 dont chacune est traversée par le corps d'un rivet 39.

Les usinages dans le manchon central 264 du plateau 26 sont ainsi considérablement réduits par rapport à la figure 1, de même que les opérations de montage et d'assemblage qui ne nécessitent plus de faire appel à un anneau 5.

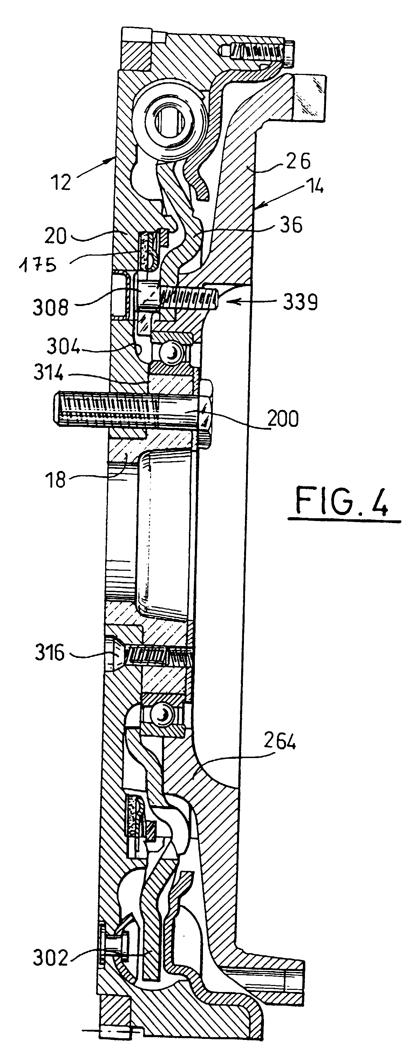

Dans la variante de réalisation illustrée sur la figure 4, et par rapport à la figure 3, les rivets 39 de fixation du disque 36 au plateau 26 ont été remplacés par des vis de fixation 39 dont les têtes 308 agissent de la même manière que les têtes des rivets 39 à la figure 3 en étant identiques à celles-ci.

Le moyeu 18 est ici réalisé sous la forme d'une pièce rapportée sur la portion centrale du plateau 20 auquel elle est fixée par les vis 200.

On notera toutefois que le plateau 20 comporte un moignon de moyeu 314 qui est raccordé au plateau 20 par des arrondis 304. Le moyeu est ainsi en deux parties.

## Revendications

1. Amortisseur de torsion (10), notamment de véhicule automobile, du type comportant un premier (12) et un second (14) éléments tournants coaxiaux qui définissent entre eux un logement annulaire (30), agencé radialement vers l'extérieur, qui reçoit un dispositif élastique d'amortissement (32) comprenant des ressorts à action circonférentielle agissant entre les deux éléments tournants (12, 14), du type dans lequel le logement annulaire (30) est délimité par au moins deux pièces (20, 22, 34) appartenant à un premier (12) des deux éléments tournants, tandis que le second (14) des deux éléments tournants comporte un plateau (26) et un disque annulaire (36) fixé au plateau par une série d'organes de fixation (39), par exemple par des rivets ou des vis, agencés circonférentiellement au voisinage du bord périphérique interne du disque (36), ledit disque (36) pénétrant dans le logement (30) pour action sur les ressorts dudit dispositif élastique et du type comportant un système annulaire d'amortissement à friction (174) à action axiale, d'une part, agencé entre le premier élément tournant (12) et le disque (36) du second élément tournant (14) et, d'autre part, disposé principalement radialement à l'extérieur de la zone occupée par les organes (39) de fixation du disque (36) et radialement vers l'intérieur par rapport au logement annulaire (30), ledit système d'amortissement à friction comportant une rondelle de frottement (175), caractérisé en ce que ledit logement annulaire est étanche, le dispositif élastique d'amortissement est lubrifié, le système d'amortissement à friction (174) est porté par une pièce en forme de plateau (20) du premier élément tournant (12), le plateau (20) du premier élément tournant comporte un manchon (131) qui s'étend axialement en saillie depuis la face interne (38) du plateau (20) tournée vers le disque (36) du second élément tournant (14) et qui délimite un alésage interne dans lequel sont agencés les composants (175 - 178) du système d'amortissement à friction (174), et les têtes (308) des organes de fixation (39) ou des tenons (260) d'orientation axiale solidaires du plateau (26) du second élément tournant (14), coopèrent avec la rondelle de frottement (175) du système d'amortissement à friction pour l'entraînement de celle-ci par le second élément tournant en sorte que le système d'amortissement à friction n'agit pas sur le disque (36).

2. Amortisseur de torsion selon la revendication 1, caractérisé en ce que ledit système d'amortissement à friction (174) comporte successivement axialement, en allant du plateau (20) du premier élément tournant (12) vers le plateau (26) du second élément tournant (14), une rondelle de frottement (175), une rondelle de répartition (176), une rondelle élastique à action axiale (177) et un circlips (178) et en ce que ledit manchon (131) présente intérieurement un alésage avec une gorge pour le montage du circlips (178) et des rainures (9) pour engagement de manière complémentaire de pattes radiales appartenant à la rondelle de répartition (176) et liaison en rotation de ladite rondelle (176) avec ledit plateau (20).

3. Amortisseur de torsion selon la revendication 2, caractérisé en ce que la rondelle de frottement (175) est serrée entre la rondelle de répartition (176) et le plateau (20) sous l'action de la rondelle élastique à action axiale (177) et présente à sa périphérie interne des mortaises (275) pour le passage avec ou sans jeu des tenons (260,308) solidaires du plateau (26) du second élément tournant (14) ou des têtes (308) des organes de fixation (39).

4. Amortisseur selon l'une quelconque des revendications 1 à 3, caractérisé en ce que le logement (30) est étanche à la faveur de deux rondelles d'étanchéité (52A,52B) disposées de part et d'autre du disque (36) et en ce que le manchon (131) du plateau (20) du premier élément tournant (12) sert également, par sa périphérie externe, à l'appui et au centrage d'une des rondelles d'étanchéité (52A) assurant l'étanchéité du logement annulaire (30) et comprimée directement entre une surface de portée appartenant au premier élément tournant (12) et une autre surface de portée appartenant au disque (36) du second élément tournant.

5. Amortisseur de torsion selon l'une quelconque des revendications 1 à 4, caractérisé en ce que le bord radial interne du disque (36) du second élément tournant comporte une première série de pattes radiales (312) réparties angulairement de manière régulière et qui sont traversées par les corps des organes de fixation (39) du disque (36) sur le plateau (26) du second élément tournant (14).

6. Amortisseur selon la revendication 5, caractérisé en ce que le premier élément tournant (12) comporte un moyeu (18) qui délimite une portée pour la bague intérieure (27) d'un roulement de palier (28) dont la bague extérieure (29) est reçue dans une portée formée dans un manchon central (264) du plateau (26) du second élément tournant (14).

7. Amortisseur de torsion selon la revendication 6, caractérisé en ce que le bord radial interne du disque (36) du second élément tournant (14) comporte une deuxième série de pattes radiales (310) réparties angulairement entre les pattes de fixation (312) de la première série, qui coopèrent avec une face radiale d'extrémité en vis-à-vis de la bague extérieure (29) du roulement (28) pour caler cette dernière axialement dans le manchon central (264) du plateau (26) du second élément tournant (14).

8. Amortisseur de torsion selon l'une quelconque des revendications 1 à 7, caractérisé en ce que, en section axiale, le disque (36) du second élément tournant présente un profil tortueux comportant un coude (306) qui épouse, avec jeu, la forme de l'extrémité du manchon (131) formé en saillie sur la face interne (38) du plateau (20) du premier élément tournant (12).

9. Amortisseur de torsion selon la revendication 8, caractérisé en ce que le disque (36) comporte, de part et d'autre du coude (306), une première portion annulaire plane (302) qui s'étend dans ledit logement annulaire étanche (30) et une seconde portion annulaire plane (300).

10. Amortisseur de torsion selon la revendication 9, caractérisé en ce que lesdites pattes de calage (310) sont décalées axialement par rapport au plan de ladite seconde portion annulaire plane (300).

11. Amortisseur de torsion selon la revendication 7, caractérisé en ce que lesdites première et seconde portions planes (302, 300) sont sensiblement coplanaires.

12. Amortisseur de torsion selon la revendication 6 ou 7, caractérisé en ce que le moyeu (18) est relié à la face interne (38) du plateau (20) du premier élément tournant (12) par une zone arrondie de raccordement (304).

13. Amortisseur de torsion selon la revendication 6 ou 7, caractérisé en ce que le moyeu (18) est réalisé en une seule pièce venue de matière avec le plateau (20) du premier élément tournant (12).

14. Amortisseur de torsion selon la revendication 6 ou 7, caractérisé en ce que le moyeu (18) est réalisé en partie sous la forme d'une pièce rapportée sur le plateau (20) du premier élément tournant (12).

15. Amortisseur de torsion selon l'une quelconque des revendications 1 à 14, caractérisé en ce qu'il consiste en un volant amortisseur de torsion pour véhicule automobile, dont le premier élément tournant comporte un plateau (20) destiné à être calé en rotation sur le moteur à combustion interne du véhicule automobile, tandis que son second élément tournant (14) est destiné à être calé en rotation sur l'arbre d'entrée de la boîte de vitesses, et en ce que le plateau (20) du premier élément tournant (12) porte à sa périphérie externe une jupe (22) d'orientation axiale, à l'extrémité libre de laquelle (22) est fixé, de manière étanche, un disque (34) s'étendant radialement vers l'intérieur, en sorte que le logement annulaire étanche (30) est délimité en majeure partie par ledit plateau (20), la jupe (22) et le disque (34), tandis que le disque (36) du second élément tournant (14) est solidaire d'un plateau (26) formant le plateau de réaction d'un embrayage.

## Patentansprüche

1. Torsionsdämpfer (10), insbesondere für Kraftfahrzeuge, umfassend ein erstes (12) und ein zweites (14) umlaufendes Element in koaxialer Anordnung, die zwischen ihnen eine radial nach außen angeordnete ringförmige Aufnahme (30) definieren, die eine elastische Dämpfungsvorrichtung (32) mit umfangsmäßig wirksamen Federn aufnimmt, die zwischen den beiden umlaufenden Elementen (12, 14) wirken, wobei die ringförmige Aufnahme (30) durch wenigstens zwei Teile (20, 22, 34) begrenzt ist, die zu einem ersten (12) der beiden umlaufenden Elemente gehören, wobei das zweite (14) der beiden umlaufenden Elemente eine Platte (26) und eine ringförmige Scheibe (36) umfaßt, die durch eine Reihe von umfangsmäßig in der Nähe der inneren Umfangskante der Scheibe (36) angeordneten Befestigungsorganen (39), beispielsweise Nieten oder Schrauben, an der Platte befestigt ist, wobei die besagte Scheibe (36) in die Aufnahme (30) eindringt, um auf die Federn der besagten elastischen Vorrichtung einzuwirken, und wobei er ein axial wirksames ringförmiges Reibdämpfungssystem (174) umfaßt, das einerseits zwischen dem ersten umlaufenden Element (12) und der Scheibe (36) des zweiten umlaufenden Elements (14) angebracht und andererseits hauptsächlich radial außerhalb des von den Befestigungsorganen (39) der Scheibe (36) eingenommenen Bereichs und im Verhältnis zur ringförmigen Aufnahme (30) radial nach innen angeordnet ist, wobei das besagte Reibdämpfungssystem eine Reibscheibe (175) umfaßt, **dadurch gekennzeichnet**, daß die besagte ringförmige Aufnahme dicht ist, die elastische Dämpfungsvorrichtung geschmiert ist, das Reibdämpfungssystem (174) an einem Teil in Form einer Platte (20) des ersten umlaufenden Elements (12) angebracht ist, die Platte (20) des ersten umlaufenden Elements (12) eine Muffe (131) umfaßt, die sich von der zur Scheibe (36) des zweiten umlaufenden Elements (14) gerichteten Innenfläche (38) der Platte (20) aus axial vorstehend erstreckt und die eine innere Bohrung begrenzt, in der die Bestandteile (175 - 178) des Reibdämpfungssystems (174) angeordnet sind, und die Köpfe (308) der Befestigungsorgane (39) oder der fest mit der Platte (26) des zweiten umlaufenden Elements (14) verbundenen, axial ausgerichteten Zapfen (260) mit der Reibscheibe (175) des Reibdämpfungssystems zusammenwirken, um deren Mitnahme durch das zweite umlaufende Element herbeizuführen, so daß das Reibdämpfungssystem nicht auf die Scheibe (36) einwirkt.

2. Torsionsdämpfer nach Anspruch 1, **dadurch gekennzeichnet**, daß das besagte Reibdämpfungssystem (174) axial hintereinander, von der Platte (20) des ersten umlaufenden Elements (12) zur Platte (26) des zweiten umlaufenden Elements (14), eine Reibscheibe (175), eine Verteilscheibe (176), eine axial wirksame Federscheibe (177) und einen Sicherungsbügel (178) umfaßt und daß die besagte Muffe (131) innen eine Bohrung mit einer Auskehlung für die Anbringung des Sicherungsbügels (178) und Nuten (9) für das formschlüssige Einsetzen von radialen Ansätzen, die zur Verteilscheibe (176) gehören, und für die drehfeste Verbindung der besagten Verteilscheibe (176) mit der besagten Platte (20) enthält.

3. Torsionsdämpfer nach Anspruch 2, **dadurch gekennzeichnet**, daß die Reibscheibe (175) unter der Einwirkung der axial wirksamen Federscheibe (177) zwischen der Verteilscheibe (176) und der Platte (20) eingespannt wird und an ihrem inneren Umfang Zapfenlöcher (275) für den mit oder ohne Spiel erfolgenden Durchgang der fest mit der Platte (26) des zweiten umlaufenden Elements (14) verbundenen Zapfen (260, 308) oder der Köpfe (308) der Befestigungsorgane (39) aufweist.

4. Torsionsdämpfer nach einem der Ansprüche 1 bis 3, **dadurch gekennzeichnet**, daß die Aufnahme (30) mittels zweier Dichtungsscheiben (52A, 52B) abgedichtet ist, die beiderseits der Scheibe (36) angeordnet sind, und daß die Muffe (131) der Platte (20) des ersten umlaufenden Elements (12) außerdem durch ihren äußeren Umfang zur Auflage und zur Zentrierung einer der Dichtungsscheiben (52A) dient, die die Abdichtung der ringförmigen Aufnahme (30) bewirkt und direkt zwischen einer Auflagefläche, die zum ersten umlaufenden Element (12) gehört, und einer anderen Auflagefläche zusammengedrückt wird, die zur Scheibe (36) des zweiten umlaufenden Elements gehört.

5. Torsionsdämpfer nach einem der Ansprüche 1 bis 4, **dadurch gekennzeichnet**, daß die radiale Innenkante der Scheibe (36) des zweiten umlaufenden Elements eine erste Reihe von radialen Ansätzen (312) umfaßt, die gleichmäßig winklig verteilt sind und durch die die Körper der Befestigungsorgane (39) zur Befestigung der Scheibe (36) an der Platte (26) des zweiten umlaufenden Elements (14) hindurchgehen.

6. Torsionsdämpfer nach Anspruch 5, **dadurch gekennzeichnet**, daß das erste umlaufende Element (12) eine Nabe (18) umfaßt, die eine Auflagefläche für den Innenring (27) eines Wälzlagers (28) begrenzt, dessen Außenring (29) in eine Auflagefläche eingesetzt ist, die in einer mittigen Muffe (264) der Platte (26) des zweiten umlaufenden Elements (14) ausgebildet ist.

7. Torsionsdämpfer nach Anspruch 6, **dadurch gekennzeichnet**, daß die radiale Innenkante der Scheibe (36) des zweiten umlaufenden Elements (14) eine zweite Reihe von winklig zwischen den Befestigungsansätzen (312) der ersten Reihe verteilten radialen Ansätzen (310) umfaßt, die mit einer gegenüberliegenden radialen Abschlußfläche des Außenrings (29) des Wälzlagers (28) zusammenwirken, um diesen axial in der mittigen Muffe (264) der Platte (26) des zweiten umlaufenden Elements (14) zu sichern.

8. Torsionsdämpfer nach einem der Ansprüche 1 bis 7, **dadurch gekennzeichnet**, daß die Scheibe (36) des zweiten umlaufenden Elements im Axialschnitt ein gewundenes Profil mit einer Abwinklung (306) aufweist, die sich mit Spiel an die Form des Endes der Muffe (131) anpaßt, die vorstehend an der Innenfläche (38) der Platte (20) des ersten umlaufenden Elements (12) ausgebildet ist.

9. Torsionsdämpfer nach Anspruch 8, **dadurch gekennzeichnet**, daß die Scheibe (36) beiderseits der Abwinklung (306) einen ersten ebenen ringförmigen Abschnitt (302), der sich in der besagten dichten ringförmigen Aufnahme (30) erstreckt, und einen zweiten ebenen ringförmigen Abschnitt (300) umfaßt.

10. Torsionsdämpfer nach Anspruch 9, **dadurch gekennzeichnet**, daß die besagten Sicherungsansätze (310) im Verhältnis zur Ebene des besagten zweiten ebenen ringförmigen Abschnitts (300) axial versetzt sind.

11. Torsionsdämpfer nach Anspruch 7, **dadurch gekennzeichnet**, daß die besagten ersten und zweiten ebenen Abschnitte (302, 300) in etwa komplanar sind.

12. Torsionsdämpfer nach Anspruch 6 oder 7, **dadurch gekennzeichnet**, daß die Nabe (18) mit der Innenfläche (38) der Platte (20) des ersten umlaufenden Elements (12) durch einen abgerundeten Anschlußbereich (304) verbunden ist.

13. Torsionsdämpfer nach Anspruch 6 oder 7, **dadurch gekennzeichnet**, daß die Nabe (18) einstückig mit der Platte (20) des ersten umlaufenden Elements (12) ausgeführt ist.

14. Torsionsdämpfer nach Anspruch 6 oder 7, **dadurch gekennzeichnet**, daß die Nabe (18) teilweise in Form eines an der Platte (20) des ersten umlaufenden Elements (12) angesetzten Teils ausgeführt ist.

15. Torsionsdämpfer nach einem der Ansprüche 1 bis 14, **dadurch gekennzeichnet**, daß er aus einem Torsionsdämpferschwungrad für Kraftfahrzeuge besteht, dessen erstes umlaufendes Element eine Platte (20) umfaßt, die für die drehfeste Verbindung mit dem Verbrennungsmotor des Kraftfahrzeugs bestimmt ist, während sein zweites umlaufendes Element (14) für die drehfeste Verbindung mit der Eingangswelle des Getriebes bestimmt ist, und daß die Platte (20) des ersten umlaufenden Elements (12) an ihrem äußeren Umfang eine axial ausgerichtete Einfassung (22) umfaßt, an deren (22) freiem Ende dicht eine Scheibe (34) befestigt ist, die sich radial nach innen erstreckt, so daß die dichte ringförmige Aufnahme (30) größtenteils durch die besagte Platte (20), die Einfassung (22) und die Scheibe (34) begrenzt ist, während die Scheibe (36) des zweiten umlaufenden Elements (14) fest mit einer Platte (26) verbunden ist, die die Gegenanpreßplatte einer Kupplung bildet.

## Claims

1. A torsion damper (10), especially for a motor vehicle, of the type comprising a first rotating element (12) and a second rotating element (14), coaxial with each other, which define between them an annular housing (30) extending radially outwardly, which receives a resilient damping device (32) comprising circumferentially acting springs that work between the two rotating elements (12, 14), being also of the type in which the annular housing (30) is defined by at least two components (20, 22, 34) of a first one (12) of the two rotating elements, while the second one (14) of the two rotating elements comprises a plate (26) and an annular disc (36) fixed to the plate by a set of fastening members (39), for example rivets or screws, arranged circumferentially in the vicinity of the inner peripheral edge of the disc (36), the said disc (36) penetrating into the housing (30) so as to act on the springs of the said resilient device, and being further of the type comprising an annular, axially-acting, frictional damping system (174) which, firstly, is arranged between the first rotating element (12) and the disc (36) of the second rotating element (14), and secondly, is disposed mainly radially outwards of the zone occupied by the fastening members (39) for the disc (36), and radially inwards with respect to the annular housing (30), the said frictional damping system including a friction ring (175), characterised in that the said annular housing is sealed, the resilient damping device is lubricated, the frictional damping system (174) is carried by a component, in the form of a plate (20), of the first rotating element (12), the plate (20) of the first rotating element comprises a sleeve (131) which projects axially from the inner surface (38) of the plate (20) that faces towards the disc (36) of the second rotating element (14), and which defines an internal bore in which the components (175 to 178) of the frictional damping system (174) are arranged, and the heads (308) of the fastening members (39), or axially oriented tenons (260), fixed to the plate (26) of the second rotating element (14), cooperate with the friction ring (175) of the frictional damping system for actuation of the latter by the second rotating element, so that the frictional damping system does not act on the disc (36).

2. A torsion damper according to Claim 1,
characterised in that the said frictional damping system (174) comprises, considered in axial succession going from the plate (20) of the first rotating element (12) towards the plate (26) of the second rotating element (14), a friction ring (175), a spacing ring (176), an axially acting resilient ring (177), and a circlip (178), and in that the said sleeve (131) has an internal bore with a groove for the fitting of the circlip (178), with recesses (9) for complementary engagement of radial lugs of the spacing ring (176) and for coupling the said ring (176) in rotation with the said plate (20).

3. A torsion damper according to Claim 2,
characterised in that the friction ring (175) is gripped between the spacing ring (176) and the plate (20) under the action of the axially acting resilient ring (177), and has at its inner periphery mortices (275) for receiving, with or without clearance, tenons (260, 308) fixed to the plate (26) of the second rotating element (14) or heads (308) of the fastening members (39).

4. A damper according to any one of Claims 1 to 3,
characterised in that the housing (30) is sealed by two sealing rings (52A, 52B) disposed on either side of the disc (36), and in that the sleeve (131) of the plate (20) of the first rotating element (12) also serves, through its outer periphery, for engagement and centring of one of the sealing rings (52A) which seals the annular housing (30) and which is compressed directly between an engagement surface of the first rotating element (12) and a further engagement surface of the disc (36) of the second rotating element.

5. A torsion damper according to any one of Claims 1 to 4, characterised in that the inner radial edge of the disc (36) of the second rotating element has a first set of radial lugs (312), arranged at regular intervals circumferentially and through which there pass the bodies of the fastening members (39) by which the disc (36) is fastened on the plate (26) of the second rotating element (14).

6. A torsion damper according to Claim 5,
characterised in that the first rotating element (12) comprises a hub (18) which defines an engagement surface for the inner ring (27) of a rolling bearing (28), the outer ring (29) of which is received in an engagement surface formed in a central sleeve portion (264) of the plate (26) of the second rotating element (14).

7. A torsion damper according to Claim 6,
characterised in that the inner radial edge of the disc (36) of the second rotating element 914) has a second set of radial lugs (310) spaced apart circumferentially between the fastening lugs (312) of the first set, and which cooperate with a radial end surface, in facing relationship therewith, of the outer ring (29) of the rolling bearing (28), so as to locate the latter axially in the central sleeve portion (264) of the plate (26) of the second rotating element (14).

8. A torsion damper according to any one of Claims 1 to 7, characterised in that, in axial cross section, the disc (36) of the second rotating element has a sinuous profile including a bend (306) which follows, with a clearance, the profile of the end portion of the sleeve (131) which projects on the inner face (38) of the plate (20) of the first rotating element (12).

9. A torsion damper according to Claim 8,
characterised in that the disc (36) comprises, on either side of the bend (306), a flat first annular portion (302) which extends into the said sealed annular housing (30), together with a flat second annular portion (300).

10. A torsion damper according to Claim 9,
characterised in that the said locating lugs (310) are offset axially with respect to the plane of the said flat second annular portion (300).

11. A torsion damper according to Claim 7,
characterised in that the said first and second flat portions (302, 300) are substantially coplanar.

12. A torsion damper according to Claim 6 or Claim 7,
characterised in that the hub (18) is joined to the inner surface (38) of the plate (20) of the first rotating element (12) through a rounded junction zone (304).

13. A torsion damper according to Claim 6 or Claim 7,
characterised in that the hub (18) is made in one piece integrally with the plate (20) of the first rotating element (12).

14. A torsion damper according to Claim 6 or Claim 7,
characterised in that the hub 918) is made partly in the form of a member attached on the plate (20) of the first rotating element (12).

15. A torsion damper according to any one of Claims 1 to 14, characterised in that it consists of a torsion damped flywheel for a motor vehicle, the first rotating element of which comprises a plate (20) which is adapted to be mounted in rotation on the internal combustion engine of the motor vehicle, while its second rotating element (14) is adapted to be mounted in rotation on the input shaft of the gearbox, and in that the plate (20) of the first rotating element (12) carries at its outer periphery an axially oriented skirt portion (22), at the free end of which there is sealingly fixed a disc (34) which extends radially inwardly, so that the greater part of the annular sealed housing (30) is bounded by the said plate (20), the skirt portion (22) and the disc (34), while the disc (36) of the second rotating element (14) is fixed to a plate (26) which constitutes the reaction plate of a clutch.
